# EUROPÄISCHE PATENTSCHRIFT

(11) **EP 2 920 535 B1**
(45) Veröffentlichungstag und Bekanntmachung des Hinweises auf die Patenterteilung: **01.02.2017**
(21) Anmeldenummer: 13791828.0
(22) Anmeldetag: 18.11.2013
(51) Int. Cl.: F27B 9/02, C21D 8/02, C21D 9/46, F27B 9/24

(54) **ROLLENHERDOFEN UND VERFAHREN ZUR WÄRMEBEHANDLUNG VON METALLISCHEN BLECHEN**
ROLLER HEARTH FURNACE AND METHOD FOR THE HEAT TREATMENT OF METAL SHEETS
FOUR À ROULEAUX ET PROCÉDÉ DE TRAITEMENT THERMIQUE DE TÔLES MÉTALLIQUES

(30) Priorität: 19.11.2012 DE 102012221120
(43) Veröffentlichungstag der Anmeldung: 23.09.2015
(73) Patentinhaber: Schwartz GmbH, 52152 Simmerath (DE)
(72) Erfinder: LÖCKER, Markus, 57413 Finnentrop (DE); LENZE, Franz Josef, 57368 Lennestadt (DE); SCHROOTEN, Axel, 44137 Dortmund (DE); WILDEN, Alexander, 52152 Simmerath (DE); LEHMANN, Harald, 47051 Duisburg (DE)
(74) Vertreter: KNH Patentanwälte
(86) Internationale Anmeldenummer: PCT/EP2013/074022
(87) Internationale Veröffentlichungsnummer: WO 2014/076266

(56) Entgegenhaltungen:
- EP-A1- 1 830 147
- DE-A1-102009 026 251
- DE-A1-102010 029 082

## Beschreibung

Die Erfindung betrifft einen Rollenherdofen zur Wärmebehandlung von metallischen Blechen sowie ein entsprechendes Verfahren.

Im Bereich der Fahrzeugindustrie ist es das Bestreben, Fahrzeuge mit einem möglichst geringen Kraftstoffverbrauch zu entwickeln. Ein übliches Mittel zur Reduzierung des Kraftstoffverbrauchs liegt dabei beispielsweise in der Reduzierung des Fahrzeuggewichts. Um jedoch steigenden Sicherheitsanforderungen gerecht zu werden, müssen die verwendeten Karosseriebaustähle bei geringerem Gewicht eine höhere Festigkeit aufweisen. Dies wird üblicherweise durch den Prozess des sogenannten Presshärtens erreicht. Dabei wird ein Blechteil auf etwa 800 - 1000°C erwärmt und anschließend in einem gekühlten Werkzeug verformt und abgeschreckt. Die Festigkeit des Bauteils nimmt dadurch bis auf etwa das Dreifache zu.

Aus Gründen der Prozesssicherheit und der Wirtschaftlichkeit haben sich Durchlauföfen, wie z.B. in der DE 10 2009 026 251 A1 beschrieben, für die Wärmebehandlung durchgesetzt. Dabei werden die zu behandelnden Metallteile kontinuierlich durch den Ofen hindurchgefördert. Alternativ können auch Kammeröfen eingesetzt werden, in denen die Metallteile chargenweise in eine Kammer verbracht, dort erwärmt und anschließend wieder entnommen werden.

Beim Presshärten unterscheidet man grundsätzlich das direkte und das indirekte Verfahren.

Beim indirekten Verfahren wird eine Platine aus einem Coil herausgestanzt, kalt verformt und das so vorgeformte Bauteil der Wärmebehandlung zugeführt. Nach der Wärmebehandlung wird das heiße Bauteil der Presse zugeführt in einem indirekt gekühlten Werkzeug pressgehärtet. Anschließend werden die Bauteile noch einmal getrimmt und zur Entfernung eventuell vorhandener Verzunderungen gesandstrahlt.

Beim direkten Verfahren wird ebenfalls eine Platine aus einem Coil herausgestanzt, allerdings findet hier keine Vorverformung statt, sondern die Platine wird direkt dem Ofen zugeführt. Nach der Wärmebehandlung wird die heiße Platine der Presse zugeführt und in einem indirekt wassergekühlten Werkzeug verformt und gleichzeitig pressgehärtet. Anschließend werden die geformten Bauteile noch einmal erforderlichenfalls getrimmt.

Für beide Verfahren haben sich aus Gründen der Prozesssicherheit und der Wirtschaftlichkeit sogenannte Rollenherdöfen durchgesetzt. Als eine alternative Ofenbauform kann beispielsweise der Hubbalkenofen genannt werden, bei dem die Metallteile mittels Hubbalken durch den Ofen transportiert werden. Auch Mehrlagenkammeröfen finden zunehmend Bedeutung.

Da die Bauteile beim indirekten Prozess vorgeformt sind, müssen sie auf Grund ihrer komplexen Form auf Warenträgern durch den Ofen gefördert bzw. in die Ofenkammer verbracht werden. Weiterhin sind Durchlauföfen für dieses Verfahren üblicherweise mit Ein- und Auslaufschleusen ausgerüstet, da beim indirekten Verfahren unbeschichtete Bauteile wärmebehandelt werden müssen. Um eine Verzunderung der Bauteiloberfläche zu vermeiden, muss ein solcher Ofen mit Schutzgas betrieben werden. Diese Ein- und Auslaufschleusen dienen zur Vermeidung des Lufteintrittes in den Ofen. Kammeröfen für dieses Verfahren können ebenfalls mit einer Schleuse ausgerüstet sein. Es ist bei dieser Ofenbauform aber auch möglich, die Atmosphäre in der Ofenkammer für jeden Zyklus auszutauschen. Durchlauföfen für dieses Verfahren müssen mit einem Warenträger-Rückfördersystem ausgestattet werden, um den Kreislauf der Warenträger zu gewährleisten. In diesen Öfen werden keramische Förderrollen eingesetzt. Nur die Ein- und Auslauftische sowie der Warenträgerrückförderer sind mit metallischen Förderrollen ausgestattet.

Bei Durchlauföfen für das direkte Verfahren entfällt der Einsatz von Warenträgern. Daher ist die Konstruktion etwas einfacher als die der Durchlauföfen für den indirekten Prozess. Statt mittels Warenträger befördert zu werden, werden die Platinen beim direkten Verfahren unmittelbar auf keramische Förderrollen aufgelegt und durch den Ofen gefördert. Diese Öfen können mit und ohne Schutzgas betrieben werden. Auch hier ist das Ofengehäuse serienmäßig gasdicht geschweißt. Ein weiterer Vorteil dieser Bauart ist in dem positiven Effekt der Förderrolle auf die gleichmäßige Erwärmung der zu behandelnden Metallteile zu sehen: Die durch die Ofenheizung mit aufgewärmten ortsfesten Rollen erwärmen über Strahlung und Wärmeleitung das auf ihnen transportierte und daher mit ihnen in Kontakt stehende Metallteil zusätzlich auf. Darüber hinaus sind diese Öfen mit einem deutlich niedrigeren Energieeinsatz zu betreiben, da es keine Warenträger gibt, die auf dem Rücktransport nach dem Ofendurchlauf auskühlen können und daher im Ofen bei einem erneuten Durchlauf wieder mit aufgeheizt werden müssen. Das direkte Verfahren wird daher mit der Verwendung von Durchlauföfen bevorzugt verwendet.

Die im Fahrzeugbau verwendeten Bleche sollen möglichst nicht rosten. Auch soll eine Verzunderung während des Bearbeitungsprozesses vermieden werden, da solche Verzunderungen zur Weiterverarbeitung, spätestens vor dem Schweiß- oder Lackierprozess, aufwändig und kostspielig entfernt werden müssen. Da unbehandelte Stahlbleche aber bei den beim Presshärten erforderlichen hohen Temperaturen unter Anwesenheit von Sauerstoff unweigerlich verzundern würden, ist es üblich, beschichtete Bleche zu verwenden und / oder den Wärmebehandlungsprozess bei Abwesenheit von Sauerstoff durchzuführen.

Üblicherweise werden für pressgehärtete Bauteile für die Automobilindustrie Aluminium-Silizium-(AlSi-)beschichtete Bleche verwendet. Die Beschichtung verhindert das Rosten der Bleche, ebenso wie ein Verzundern der heißen Bleche auf dem Transfer von dem Ofen zur Presse. Das AlSi des Überzugs diffundiert einerseits in die Stahloberfläche und andererseits bildet es eine dichte AlSi-Oxidschicht, welche den Grundwerkstoff gegen weitere Verzunderung schützt.

Der gravierendste Nachteil des direkten Presshärtens in den oben beschriebenen Rollenherdöfen liegt darin begründet, dass AlSi-beschichtete Platinen direkt auf die keramischen Förderrollen aufgelegt werden, und es dadurch zu starken thermo-chemischen Reaktionen zwischen der AlSi-Beschichtung und den keramischen Rollen kommt.

Bei den derzeit in Rollenherdöfen im Einsatz befindlichen Rollen handelt es sich um Hohlrollen aus dem Werkstoff Sinter-Mullit (3Al₂0₃.2Si0₂) und Vollrollen aus Quarzgut. Die Quarzgut-Rollen bestehen zu über 99 % aus Si0₂ und haben eine Anwendungsgrenze von ca. 1100°C mit dem Nachteil, dass sie sich bei ca. 700 bis 800°C durch das Eigengewicht verbiegen. Rollen aus Sinter-Mullit können belastet bis 1350°C eingesetzt werden, ohne dass es zu signifikanten Verbiegungen kommt. Der große Vorteil beider Werkstoffe ist die hohe Temperaturwechselbeständigkeit. Allerdings haben beide Werkstoffe eine sehr hohe Affinität, mit geschmolzenem Aluminium zu unterschiedlichen AluminiumSilikat oder gar Silizid-Verbindungen zu reagieren. Die AlSi-Beschichtung kann während der Wärmebehandlung aufschmelzen. Im Betrieb bildet sich bei der entsprechenden Temperatur auf den Rollen gerade im vorderen Teil der Förderstrecke eine teigige bis flüssige AlSi-Schicht auf den keramischen Ofenrollen. Diese Schicht wird mit der Länge der Förderstrecke kleiner, da das AlSi im Laufe der Ofenfahrt mit Eisen aus dem Grundwerkstoff auflegiert wird. Der Ort über der Förderstrecke, an dem kein freies AlSi mehr vorliegt, ist abhängig von der Aufheizkurve und somit von der installierten Heizleistung im Ofen in Abhängigkeit von der Förderstrecke sowie der Blechdicke und der Beschichtungsdicke.

In jüngster Zeit werden alternativ zu AlSi-beschichteten Blechen Bleche mit Zinklegierungsüberzügen für die Warmumformung, beispielsweise Bleche mit einer Zink-Nickel-Beschichtung unter der Bezeichnung Gamma Protect von der Firma Thyssen Krupp Steel Europe AG, beispielsweise für die Verarbeitung zu Fahrzeugkarosserieteilen angeboten. Der oben beschriebene Presshärteprozess kann mit diesen Blechen in analoger Weise und grundsätzlich auf den gleichen Rollenherdöfen wie bei dem Presshärten von AlSi-beschichteten Blechen durchgeführt werden. Allerdings ist die Verarbeitung der Bleche mit Zinklegierungsüberzügen für die Warmumformung auf mit AlSi-Rückständen verunreinigten Rollen aus diversen Gründen nicht ohne weiteres möglich. Daher müssen die Öfen bei dem Wechsel von AlSi-beschichteten Blechen auf Bleche mit Zinklegierungsüberzügen für die Warmumformung aufwändig umgerüstet werden, indem beispielsweise die entsprechenden Rollen ausgetauscht werden. Da die Rollen Prozesstemperatur in der Größenordnung von 1.000°C aufweisen können, und ein Austausch der Rollen bei diesen Temperaturen nicht oder nicht einfach möglich ist, muss der Ofen zur Umrüstung zunächst abkühlen, um nach der Umrüstung wieder aufgeheizt zu werden, was einen großen Zeitaufwand, Energieverbrauch und Produktionsausfall bedeutet.

Aufgabe der Erfindung ist es daher, einen Rollenherdofen für die wechselnde Verarbeitung von AISi- beschichteten Blechen und Blechen mit Zinklegierungsüberzügen für die Warmumformung anzugeben, bei dem der Aufwand für den Wechsel gegenüber dem Stand der Technik deutlich minimiert ist.

Erfindungsgemäß wird diese Aufgabe durch einen Rollenherdofen mit den Merkmalen des unabhängigen Anspruches 3 gelöst.

Eine weitere Aufgabe der Erfindung besteht darin, ein Verfahren für die wechselnde Verarbeitung von AlSi-beschichteten Blechen und Blechen mit Zinklegierungsüberzügen für die Warmumformung unter Benutzung eines erfindungsgemäßen Rollenherdofens anzugeben.

Diese Aufgabe wird durch ein Verfahren mit den Merkmalen des Anspruchs 1 gelöst. Eine vorteilhafte Weiterbildung des Verfahrens ergibt sich aus dem Unteranspruch 2.

Der erfindungsgemäße Rollenherdofen für die Wärmebehandlung beschichteter Metallteile zeichnet sich dadurch aus, dass er mindestens zwei unterschiedliche Temperaturzonen aufweist, wobei in der ersten Zone eine Temperatur unterhalb der Schmelztemperatur der AlSi-Ablagerungen oder eine Temperatur von mehr als ca. 900°C haltbar ist, während in der zweiten Zone eine Temperatur von mehr als ca. 870°C erreichbar ist.

Bei der Wärmebehandlung AlSi-beschichteter Bleche in einem Rollenherdofen kann sich eine Schicht von AlSi auf den Rollen des vorderen Ofenteils bilden. Diese Schicht hat eine teigige, pastöse Konsistenz, kann aber auch flüssig sein.

Bei dem direkten Verfahren fahren die beschichteten Bleche in den heißen Ofen ein und befinden sich in unmittelbarem Kontakt mit den auf Verfahrenstemperatur oder fast auf Verfahrenstemperatur aufgeheizten Rollen. Die Verfahrenstemperatur beträgt dabei üblicherweise ca. 930°C. Die Schmelztemperatur von AlSi beträgt andererseits ca. 600°C, so dass das AlSi bei der Verfahrenstemperatur zügig aufschmilzt. Der Prozess, bei dem das aufgeschmolzene AlSi durch Diffusionsprozesse wieder fest wird, benötigt eine Zeitspanne. Die Stahlhersteller schreiben beispielsweise eine Prozesszeit von 300 s - 360 s vor. Während das beschichtete Blech durch den Öfen transportiert wird, heizt es sich auf. Die Aufheizgeschwindigkeit hängt dabei von der installierten Heizleistung in dem Ofen sowie der Verteilung dieser Heizleistung einerseits und andererseits von der Blech- und Beschichtungsdicke ab. Abhängig von der Durchlaufgeschwindigkeit des beschichteten Blechs durch den Ofen existiert bei geeigneter Prozessführung ein Ort in dem Ofen, an dem das aufgeschmolzene AlSi in die Blechmatrix eindiffundiert ist. Bis zu diesem Ort können sich AlSi-Rückstände an den Rollen des Rollenherdofens ablagern. In Förderrichtung gesehen hinter diesem Ort ist kein freies AlSi mehr auf dem Blech vorhanden, so dass sich keine AlSi-Schmelze mehr auf eine Rolle hinter diesem Ort ablagern kann. Ein für die Wärmebehandlung von AlSi-beschichteten Blechen geeigneter Rollenherdofen weist eine Länge auf, die so gewählt ist, dass sich das zu behandelnde Blech mindestens für die Prozesszeit, beispielsweise 300 s, in dem Ofen befindet.

Für die Wärmebehandlung von Blechen mit Zinklegierungsüberzügen für die Warmumformung kann die Prozesszeit geringer sein. Besonders Zink-Nickel Legierungsüberzüge, wie die beispielsweise von Thyssen Krupp Steel Europe AG als GammProtect vertriebenen, zeichnen sich durch besonders kurze Prozesszeiten aus. Darüber hinaus ist für den Diffusionsprozess der Zinklegierungsüberzüge eine etwas niedrigere Temperatur von ca. 870°C bis 900°C erforderlich, als für den Diffusionsprozess einer AlSi-Beschichtung mit ca. 930°C. Daher ist es möglich, eine erste Zone eines für die Wärmebehandlung von AlSi-beschichteten Blechen geeigneten Rollenherdofens auf einer Temperatur unterhalb der Schmelztemperatur der AlSi-Ablagerungen zu halten. Wird diese erste Zone so groß gewählt, dass sich in einer in Förderrichtung gesehen hinter dieser Zone gelegenen zweiten Zone keine AlSi-Rückstände mehr auf den Rollen befinden, kann bei einer entpsrechenden Prozessführung ein Blech mit Zinklegierungsüberzügen für die Warmumformung auf demselben Ofen wärmebehandelt werden, ohne dass die mit AlSi-Rückständen verunreinigten Rollen der ersten Zone ausgetauscht oder gereinigt werden müssten. Da die Temperatur in der ersten Zone unterhalb der Schmelztemperatur der AlSi-Ablagerungen gehalten wird, kann sich kein AlSi von den Rollen in nennenswertem Umfang lösen und mit Zinklegierungsüberzügen für die Warmumformung reagieren.

In einer vorteilhaften Ausführung kann in der ersten Zone, das heißt der Zone mit verunreinigten Rollen, eine Temperatur von ca. 300° - 750°C, idealerweise von ca. 500° bis 600°C und speziell unter ca. 575°C gehalten werden, während in der zweiten Zone eine Temperatur von mehr als ca. 870°C herrscht. Alternativ ist in der ersten Zone ebenfalls eine Temperatur von mehr als ca. 900°C haltbar. Bei der Verarbeitung von Blechen mit Zinklegierungsüberzügen für die Warmumformung werden die Bleche bei einer Temperatur in der ersten bis maximal zur Höhe der herrschenden Zonentemperatur vorgewärmt, wobei die Temperatur sicher unterhalb der Schmelztemperatur der AlSi-Ablagerungen bleibt und eventuell vorhandene AlSi-Rückstände an den Rollen nicht aufschmelzen. Durch die Vorwärmung können die Bleche in der zweiten Zone schneller auf die für die Wärmebehandlung von Blechen mit Zinklegierungsüberzügen für die Warmumformung erforderliche Prozesstemperatur von ca. 890°C aufgeheizt werden. Sollen wieder AlSi-beschichtete Bleche verarbeitet werden, wird die Temperatur auch in der ersten Zone auf die für die Wärmebehandlung von AlSi-beschichteten Blechen erforderliche Prozesstemperatur von ca. 930°C aufgeheizt und gehalten.

Es hat sich als vorteilhaft erwiesen, wenn die Zonen thermisch im Wesentlichen voneinander trennbar sind, das heißt insbesondere die erste Zone von der zweiten Zone thermisch trennbar ist. Dazu hat sich eine Trennvorrichtung als vorteilhaft erwiesen. Eine Trennvorrichtung kann beispielsweise eine Wand ein thermisch isolierendes Material aufweisend sein. Diese Wand kann von oben im Wesentlichen senkrecht zu der Förderrichtung bis kurz über die Ebene der Rollen reichen und die Ofenräume der ersten von der zweiten Zone trennen, so dass nur noch ein Spalt für die Rollen und das geförderte, zu behandelnde Blech offen bleibt.

Die thermische Trennvorrichtung kann unbeweglich in dem Ofenraum vorgesehen sein. Eine unbewegliche thermische Trennvorrichtung ist dabei leicht zu realisieren und trotz der im Ofen im Betrieb herrschenden Betriebstemperaturen wartungsfrei.

In einer alternativen Ausführungsform ist die thermische Trennvorrichtung ein- und ausfahrbar gestaltet. Wird ein Blech mit Zinklegierungsüberzügen für die Warmumformung verarbeitet, kann die thermische Trennvorrichtung eingefahren werden, so dass die Zonen thermisch im Wesentlichen voneinander getrennt sind, insbesondere die erste Zone von der zweiten Zone thermisch im Wesentlichen getrennt ist. Sollen dagegen AlSi-beschichtete Bleche verarbeitet werden, kann die thermische Trennvorrichtung ausgefahren werden, so dass die thermische Trennung der Zonen aufgehoben ist und sich eine im Wesentlichen homogene Temperatur im gesamten Öfen einstellt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
Fig. 1 Rollenherdofen
Fig. 2 Werkstücke beim Transport durch einen Rollenherdofen
Fig. 3 Rollenherdofen mit Temperaturverteilung von durch den Ofen geförderten AlSi-beschichteten Blechen
Fig. 4 Rollenherdofen mit Temperaturverteilung von durch den Ofen geförderten Blechen mit Zinklegierungsüberzügen für die Warmumformung

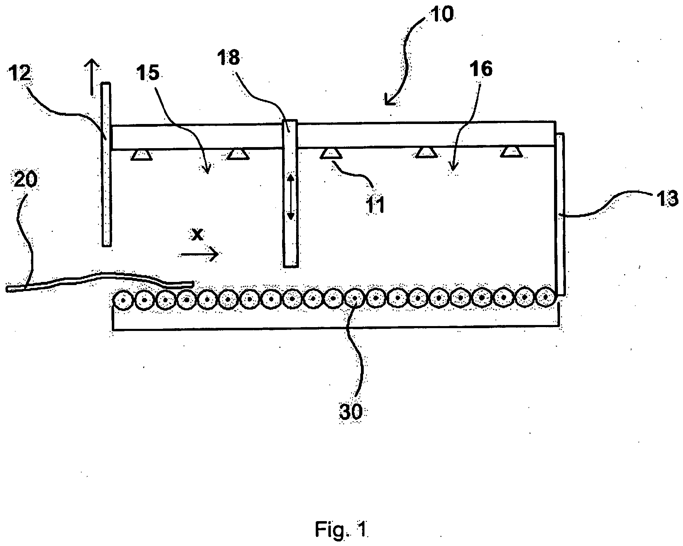

Fig. 1 ist die schematische Darstellung eines Rollenherdofens 10. Ein Werkstück 20 wird durch einen eingangsseitigen Trennschieber 12, der das Ofeninnere gegen die Außenatmosphäre abtrennt und der geöffnet und geschlossen werden kann, auf Tragmitteln in Form von Rollen 30 in die Ofenkammer gefördert. Dort erhält das Werkstück 20 seine Wärmebehandlung, indem es von Heizmitteln 11 erwärmt wird. Als Heizmittel 11 kommen beispielsweise Gasbrenner oder elektrische Heizelemente in Betracht. Dabei wird es weiter auf den Rollen 30 durch die Ofenkammer gefördert. Wenn das Werkstück 20 komplett in die Ofenkammer eingefördert ist, wird der eingangsseitige Trennschieber 12 geschlossen. Um das Werkstück 20 aus der Ofenkammer wieder herausfördern zu können, befindet sich gegenüber der eingangsseitigen Abdeckung 12 eine ausgangsseitige Abdeckung 13, die ebenfalls als Trennschieber ausgeführt ist und öffnen- und schließbar ist. Wenn das Werkstück aus der Ofenkammer herausgefördert werden soll, öffnet dieser ausgangsseitige Trennschieber 13 und das Werkstück 20 wird mittels der Rollen 30 aus dem Ofen 10 herausgefördert. In dem Ofen ist weiterhin eine thermische Trennvorrichtung 18 vorgesehen, die in vertikaler Richtung bewegbar ist. Alternativ kann die thermische Trennvorrichtung 18 auch unbeweglich vorgesehen sein. Die thermische Trennvorrichtung trennt eine erste Zone 15 von einer zweiten Zone 16. In der eingezeichneten Stellung ist sie maximal nach unten in Richtung der Rollen 30 gefahren, so dass zwischen den Rollen 30 und der Unterkante der thermischen Trennvorrichtung 18 ein Spalt erhalten bleibt, der so bemessen ist, dass ein Werkstück 20 passieren kann, ohne die thermische Trennvorrichtung 18 zu berühren.

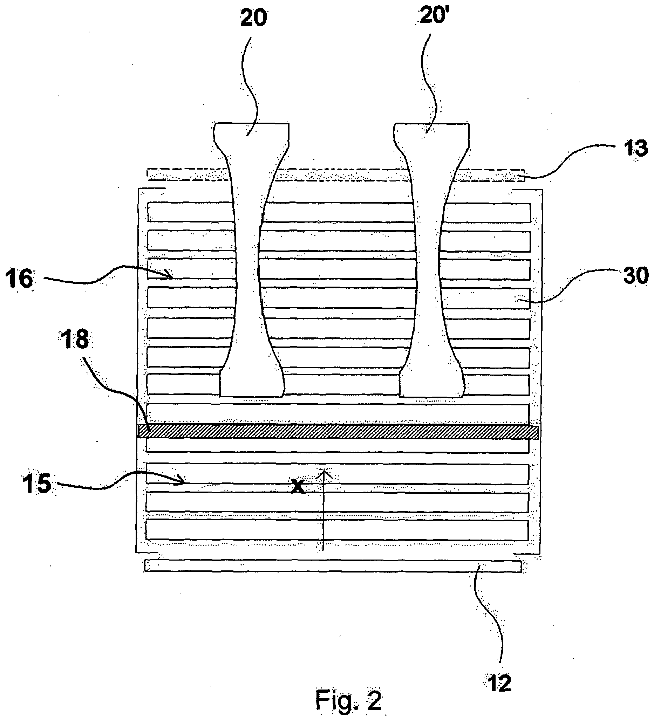

In Fig. 2 ist in einer Draufsicht zu sehen, wie zwei Werkstücke 20, 20' parallel durch den Ofen 10 gefördert werden. Die zwei Werkstücke 20, 20' liegen auf Tragmitteln in Form von Rollen 30 auf, die durch ihre Drehung die Werkstücke 20, 20' parallel durch die Ofenkammer fördern. Die Eingangs- und Ausgangsseiten des Ofens können mit Trennschiebern 12, 13 geöffnet werden, um die Werkstücke 20, 20' passieren zu lassen. Nach der Passage der Werkstücke 20, 20' werden die Trennschieber 12, 13 wieder geschlossen. Weiterhin ist die thermische Trennvorrichtung 18 angedeutet. Diese erstreckt sich über die gesamte Innenbreite des Ofenraums und trennt die erste Zone 15 von einer zweiten Zone 16.

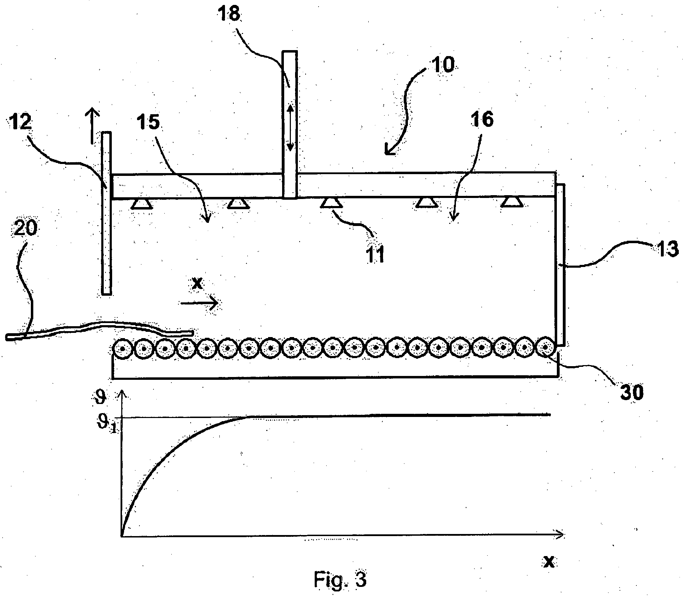

Fig. 3 zeigt erneut eine schematische Darstellung eines erfindungsgemäßen Rollenherdofens 10. In der dargestellten Situation ist die thermische Trennvorrichtung 18 aus dem Ofen 10 ausgefahren, so dass die erste Zone 15 nicht von der zweiten Zone 16 thermisch getrennt ist. Diese Stellung ist für die Verarbeitung AlSi-beschichteter Bleche 20, 20' vorgesehen. Diese Bleche können aber auch in der alternativen Ausführungsform mit unbeweglicher thermischer Trennvorrichtung verarbeitet werden. In beiden Zonen 15,16 herrscht eine Temperatur von ca. 930°C. In dem Diagramm unter der Darstellung des Ofens 10 ist die Temperatur von durch den Ofen 10 geförderten AlSi-beschichteten Blechen 20, 20' aufgetragen. Die Bleche 20, 20' weisen am Ofeneingang, das heißt bei Passieren des eingangsöffnungseitigen Trennschiebers 12, Raumtemperatur auf. In der heißen Ofenatmosphäre und durch Beheizung mit den Heizmitteln 11 erreichen sie bald eine Temperatur ϑ₁, beispielsweise ca. 930°C, die bis zum Verlassen des Ofens 10 gehalten wird.

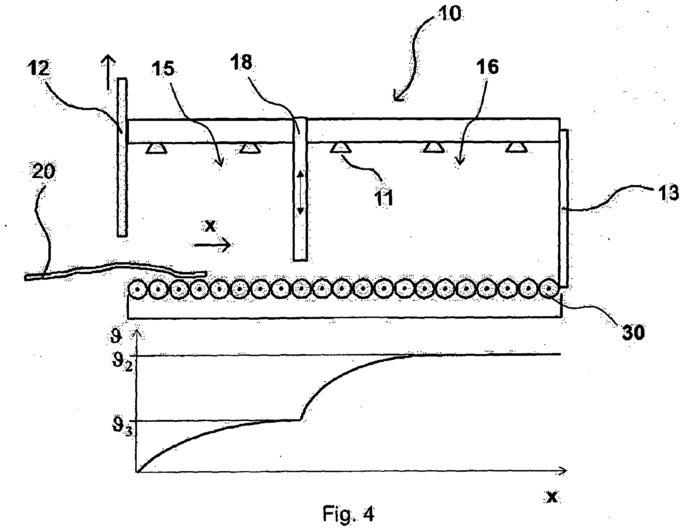

Fig. 4 zeigt eine schematische Darstellung eines erfindungsgemäßen Rollenherdofens 10 in der Situation für die Verarbeitung von Blechen mit Zinklegierungsüberzügen für die Warmumformung 20, 20'. Die thermische Trennvorrichtung 18 ist in den Ofen 10 eingefahren, so dass die erste Zone 15 von der zweiten Zone 16 thermisch getrennt ist, wie es auch in der alternativen Ausführungsform mit unbeweglicher thermischer Trennvorrichtung 18 der Fall ist. In der ersten Zone 15 ist eine Temperatur ϑ₃ eingestellt, beispielsweise bis zu ca. 575°C. In der zweiten Zone 16 herrscht dagegen eine Temperatur von ca. 890°C.

In dem Diagramm unter der Darstellung des Ofens 10 ist die Temperatur von durch den Ofen 10 geförderten Blechen mit Zinklegierungsüberzügen für die Warmumformung 20, 20' aufgetragen. Die Bleche 20, 20' weisen am Ofeneingang, das heißt bei Passieren des eingangsöffnungsseitigen Trennschiebers 12, Raumtemperatur auf. In der heißen Ofenatmosphäre und durch Beheizung mit den Heizmitteln 11 erreichen sie bald die Temperatur ϑ₃, beispielsweise bis zu ca. 575°C. Die Bleche 20, 20' werden unter der in den Ofen 10 eingefahrenen thermischen Trennvorrichtung 18 hindurch in die zweite Zone 16 gefördert, in der eine Temperatur ϑ₂ von ca. 890°C herrscht. Die Bleche 20, 20' heizen sich zügig auf diese Temperatur auf und halten diese bis zum Verlassen des Ofens 10. Wurden vor der Verarbeitung der Bleche mit Zinklegierungsüberzügen für die Warmumformung 20, 20' AlSi-beschichtete Bleche 20, 20' in dem bei der Beschreibung der Fig. 3 geschilderten Prozess wärmebehandelt, können sich AlSi-Rückstände an den Rollen 30 der ersten Zone 15 befinden. Diese schmelzen bei der relativ niedrigen Temperatur ϑ₃ von bis zu ca. 575°C nicht auf, so dass sie die auf ihnen geförderten Bleche mit Zinklegierungsüberzügen für die Warmumformung 20, 20' nicht verunreinigen. Der Ort der thermischen Trennvorrichtung 18 ist so gewählt, dass ab diesem Ort in Förderrichtung x gesehen auch bei der ungünstigsten Konstellation von AlSi-beschichteten Blechen 20, 20' mit großer Blech- und Schichtdicke und geringster Heizleistung sich kein freies AlSi mehr an den Blechen 20, 20' befindet und der Diffusionsprozess zumindest an der unmittelbaren Oberfläche der Bleche 20, 20' abgeschlossen ist. Daher können sich auf den Rollen 30 in der zweiten Zone 16 keine AlSi-Rückstände befinden, die die anschließend verarbeiteten Bleche mit Zinklegierungsüberzügen für die Warmumformung 20, 20' verunreinigen könnten.

Die thermische Trennvorrichtung 18 kann so ausgestaltet werden, dass sie in einer variablen Höhe über der Ebene der Rollen 30 endet. Dazu kann die thermische Trennvorrichtung 18 ganz oder nur teilweise in den Ofenraum eingefahren werden. Bei unterschiedlichen Stärken der zu behandelnden Bleche 20, 20' oder im Raum unterschiedliche vorgeformten zu behandelnden Werkstücken 20, 20' kann auf diese Art die thermische Trennung optimiert werden. Der freie Querschnitt zwischen thermischer Trennung 18 und Rollen 30 kann für jedes zu behandelnde Werkstück minimal gewählt werden, so dass der Wärmeaustausch zwischen erste Zone 15 und zweiter Zone 16 minimal ist. Dadurch können die Temperaturen in den beiden Zonen 15, 16 in engeren Toleranzen gehalten werden und die Aufheizkurve der Bleche beim Eintritt in die zweite Zone 16 optimiert werden.

Die hier gezeigten Ausführungsformen stellen nur Beispiele für die vorliegende Erfindung dar und dürfen daher nicht einschränkend verstanden werden. Alternative, durch den Fachmann in Erwägung gezogene Ausführungsformen, sind gleichermaßen vom Schutzbereich der vorliegenden Erfindung umfasst.

### Bezugszeichenliste:

- 10: Ofen, Rollenherdofen
- 11: Heizmittel
- 12: Abdeckung Eingangsöffnung, Trennschieber
- 13: Abdeckung Ausgangsöffnung, Trennschieber
- 15: erste Zone
- 16: zweite Zone
- 18: thermische Trennvorrichtung
- 20, 20': Werkstück
- 30: Rolle
- x: Förderrichtung
- ϑ: Temperatur
- ϑ₁: Temperatur 1
- ϑ₂: Temperatur 2
- ϑ₃: Temperatur 3

## Patentansprüche

1. Verfahren für die wechselnde Verarbeitung von AISi- und Blechen mit Zinklegierungsüberzügen für die Warmumformung (20, 20') in einem Rollenherdofen (10),
**dadurch gekennzeichnet,**
**dass** bei der Verarbeitung von ALSi-beschichteten Blechen (20, 20') in allen Zonen (15, 16) des Rollenherdofens (10) eine Temperatur von mehr als ca. 900°C gehalten wird, während bei der Verarbeitung von Blechen mit Zinklegierungsüberzügen für die Warmumformung (20, 20') in einer ersten Zone (15) des Rollenherdofens (1 0), in der Anhaftungen von AlSi-Rückständen auf den Rollen (30) vorhanden sein können, eine Temperatur unterhalb der Schmelztemperatur von AlSi-Ablagerungen gehalten wird, während in einer zweiten Zone (16) und eventuellen weiteren Zonen des Rollenherdofens (10) in Förderrichtung (x) hinter der ersten Zone (15) eine Temperatur von mehr als ca. 870°C gehalten wird.

2. Verfahren für die wechselnde Verarbeitung von AISi- und Blechen mit Zinklegierungsüberzügen für die Warmformung (20, 20') in einem Rollenherdofen (1 0) nach Anspruch 1
**dadurch gekennzeichnet,**
**dass** bei der Umstellung des Rollenherdofens (1 0) von der Verarbeitung von AlSi-beschichteten Blechen (20, 20') auf die Verarbeitung von Blechen mit Zinklegierungsüberzügen für die Warmumformung (20, 20') eine thermische Trennvorrichtung (18) zwischen die eventuell mit AlSi-Ablagerungen verschmutzte Rollen aufweisende erste Zone (15) und die zweite Zone (16) in den Rollenherdofen (10) eingebracht wird.

3. Rollenherdofen (1 0) für die wechselnde Wärmebehandlung AlSi-beschichteter und mit Zinklegierungsüberzügen versehener Metallteile (20, 20') gemäß dem Verfahren nach einem der Ansprüche 1 und 2, ausgerüstet mit Rollen (30) als Fördermittel für die zu verarbeitenden Werkstücke (20, 20', 20"),
**dadurch gekennzeichnet,**
**dass** der Ofen (10) mindestens. eine erste Zone (15) und eine zweite Zone (16) aufweist, wobei in der ersten Zone. (15) eine Temperatur von höchstens ca. 575°C oder eine Temperatur von mehr als ca. 900°C haltbar ist, während in der zweiten Zone (16) eine Temperatur von mindestens ca. 870°C erreichbar ist, wobei die erste Zone (15) mit einer thermischen Trennvorrichtung (18) von der zweiten Zone (16) und von möglichen weiteren Zonen thermisch trennbar ist, wobei die thermische Trennvorrichtung (18) aus dem Ofenraum ein- und ausfahrbar ist.

## Claims

1. A method for the alternating processing of AlSi-coated metal sheets and metal sheets with zinc alloy coatings for hot-working (20, 20') in a roller hearth furnace (10),
**characterized in that**,
when AlSi-coated metal sheets (20, 20') are processed, a temperature of more than approximately 900°C [1652°F] is maintained in all of the zones (15, 16) of the roller hearth furnace (10), whereas when metal sheets with zinc alloy coatings for hot-working (20, 20') are processed, a temperature below the melting temperature of the AlSi deposits is maintained in the first zone (15) of the roller hearth furnace (10) where adhesions of AlSi residues can be present on the rollers (30), whereas a temperature of more than approximately 870°C [1598°F] is maintained in the second zone (16) and in any conceivable additional zones of the roller hearth furnace (10) downstream from the first zone (15) as seen in the conveying direction (x).

2. The method for the alternating processing of AlSi-coated metal sheets and metal sheets with zinc alloy coatings for hot-working (20, 20') in a roller hearth furnace (10) according to claim 1,
**characterized in that**,
when the roller hearth furnace (10) is switched over from the processing of AlSi-coated metal sheets (20, 20') to the processing of metal sheets with zinc alloy coatings for hot-working (20, 20'), a thermal separation means (18) is inserted into the roller hearth furnace (10) between the first zone (15) that has rollers that might be contaminated with AlSi deposits and the second zone (16).

3. A roller hearth furnace (10) for the alternating heat treatment of metal parts (20, 20') that are AlSi-coated and of metal parts (20, 20') that are provided with zinc alloy coatings, in accordance with the method according to one of claims 1 and 2, said roller hearth furnace being equipped with rollers (30) as conveying means for the workpieces (20, 20', 20") that are to be processed,
**characterized in that**
the furnace (10) has at least a first zone (15) and a second zone (16), whereby in the first zone (15), a temperature of 575°C [1067°F] at the maximum or a temperature of more than approximately 900°C [1652°F] can be maintained, whereas in the second zone (16), a temperature of at least approximately 870°C [1598°F] can be reached, whereby the first zone (15) can be thermally separated from the second zone (16) and from conceivable additional zones by means of a thermal separation means (18), whereby said thermal separation means (18) can be pushed into and pulled out of the furnace chamber.

## Revendications

1. Procédé pour le traitement en alternance de tôles pourvues de revêtements d'AlSi et de tôles pourvues de revêtements d'alliage de zinc pour le formage à chaud (20, 20') dans un four à rouleaux (10), **caractérisé en ce que**, lors du traitement de tôles revêtues d'AlSi (20, 20'), une température supérieure à environ 900 °C est maintenue dans toutes les zones (15, 16) du four à rouleaux (10), tandis qu'est maintenue, lors du traitement de tôles pourvues de revêtements d'alliage de zinc pour le formage à chaud (20, 20') dans une première zone (15) du four à rouleaux (10) dans laquelle peuvent se trouver des dépôts adhérents de résidus d'AlSi sur les rouleaux (30), une température inférieure à la température de fusion de dépôts d'AlSi, tandis qu'est maintenue, dans une deuxième zone (16) et d'éventuelles autres zones du four à rouleaux (10), derrière la première zone (15) dans le sens de transport (x), une température supérieure à environ 870 °C.

2. Procédé pour le traitement en alternance de tôles pourvues de revêtements d'AlSi et de tôles pourvues de revêtements d'alliage de zinc pour le formage à chaud (20, 20') dans un four à rouleaux (10) selon la revendication 1, **caractérisé en ce que**, lors du passage du four à rouleaux (10) du traitement de tôles revêtues d'AlSi (20, 20') au traitement de tôles pourvues de revêtements d'alliage de zinc pour le formage à chaud (20, 20'), un dispositif de séparation thermique (18) est introduit entre la première zone (15) présentant des rouleaux éventuellement encrassés par des dépôts d'AiSi et la deuxième zone (16) dans le four à rouleaux (10).

3. Four à rouleaux (10) pour le traitement thermique en alternance de pièces métalliques (20, 20') revêtues d'AlSi et pourvues de revêtements d'alliage de zinc selon le procédé selon l'une des revendications 1 et 2, équipé de rouleaux (30) en tant que moyens de transport pour les pièces usinées à traiter (20, 20', 20"), **caractérisé en ce que** le four (10) comporte au moins une première zone (15) et une deuxième zone (16), une température d'environ 575 °C au maximum ou une température supérieure à environ 900 °C pouvant être maintenue dans la première zone (15), tandis qu'il est possible d'obtenir une température d'au moins environ 870 °C dans la deuxième zone (16), la première zone (15) pouvant être séparée thermiquement de la deuxième zone (16) et d'éventuelles autres zones par un dispositif de séparation thermique (18), le dispositif de séparation thermique (18) pouvant rentrer dans l'enceinte du four et en ressortir.
